# EUROPÄISCHE PATENTANMELDUNG

(11) **EP 1 510 477 A1**
(43) Veröffentlichungstag der Anmeldung: **02.03.2005**
(21) Anmeldenummer: 03019867.5
(22) Anmeldetag: 01.09.2003
(51) Int. Cl.: B65G 13/071, B65G 13/06

(54) **Reibrollentrieb für auf Tragrollen verfahrbare Skids**

(71) Anmelder: SIEMENS AKTIENGESELLSCHAFT, 80333 München (DE)
(72) Erfinder: Janssen, Peter, 28035 Madrid (ES); Liebana, Juan Jose, 28020 Madrid (ES); Lujan, Juan Pedro, 28032 Madrid (ES); Quiroga, Jesus, 28035 Madrid (ES)

(57) **Zusammenfassung**

Die Erfindung betrifft ein Antriebssystem für auf ortsfesten Trägerrollen (5) verfahrbare Skids, bestehend aus einem Rollenförderer (1) auf dem ein mit seinen Kufen (6) auf den Trägerrollen aufliegendes Skid mittels an den Kufen angreifende Antriebsmittel fortbewegbar ist. Um ein einfaches zuverlässiges und kostengünstiges Antriebssystem zu schaffen, das wartungsfrei ist und das die geforderten höheren Fördergeschwindigkeiten bei geräuscharmen Betrieb ermöglicht wird vorgeschlagen, als Antriebsmittel in jeder Rollenleiste (2, 3) zwischen zwei benachbarten Trägerrollen (5) mindestens ein Reibrad (7, 8) mit parallel zu den Achsen der Trägerrollen (5) ausgerichteter Drehachse zu integrieren, dessen an die Kufe (6) anlegbarer Außenumfangsflächenbereich die Auflageebene der Kufen (6) auf den Trägerrollen (5) geringfügig überragt.

## Beschreibung

Die Erfindung betrifft ein Antriebssystem für auf ortsfesten Trägerrollen einer Fließfertigungsstraße verfahrbare Skids, insbesondere für die Automobilefertigung, bestehend aus mindestens zwei im parallelen Abstand zueinander angeordneten, einen Rollenförderer bildenden Rollenleisten, in denen im Abstand zueinander Trägerrollen um horizontale, quer zur Transportrichtung des Skids ausgerichtete Achsen frei drehbar derartig gelagert sind, dass ein mit seinen Kufen auf den Trägerrollen aufliegendes Skid mittels an den Kufen angreifender Antriebsmittel fortbewegbar ist.

Skids werden vorwiegend in der Automobilfertigung zur Montage von Fahrzeugen oder deren Karosserieteilen verwendet. Sie bestehen gewöhnlich aus einem Rahmengerüst als Träger, wobei das Rahmengerüst zwei parallel in Längsrichtung verlaufende Kufen aufweist, die auf einem Transportmittel abgetragen werden. Als Transportmittel sind sowohl angetriebene, wie auch frei umlaufende Trägerrollen bekannt, wobei der Antrieb der Skids im ersten Fall über die Rollen unmittelbar erfolgt, während im zweiten Fall, also bei frei umlaufenden Rollen, ein separater Antrieb vorgesehen ist. Der separate Antrieb wird bekanntermaßen als Reibradantrieb gestaltet, wie z.B. bei der DE 38 40 256 A1, wo die angetriebenen Reibräder um vertikale Achsen drehbar an die Längsseitenbereiche der Montageplattformen anpressbar sind.

Eine Lösung mit angetriebenen Trägerrollen ist beispielsweise aus der DE 40 07 707 A1 bekannt, die Trägerollen werden über Ketten oder Zahnriemen angetrieben, wobei jeweils zwei benachbarte Trägerrollenachsen von einem gemeinsamen endlosen Zahnriemen umschlungen werden.

Aufgrund immer niedrigerer Taktzeiten in der Kraftfahrzeugfertigung werden immer höhere Förderergeschwindigkeiten am Skidförderer gefordert. Bei Geschwindigkeiten von mehr als 40 m/min. erreicht der Rollenförderantrieb mittels Zahnriemen bezüglich der Belastbarkeit der Zahnriemen, seiner Lebensdauer, seiner Abriebfestigkeit und der Formstabilität der Zähne seine absolute Grenze. Schon bei diesen Grenzbelastungen können, insbesondere wenn größere Wellenabstände bzw. längere Teilungen überbrückt werden, Zahnüberspringer stattfinden, die zu Störungen der Anlage und zum Zerreißen der Zahnriemen führen können. Um Störungen zu minimieren müssen die Zahnriemenantriebe der Trägerrollen intensiv gewartet werden; denn das Reißen nur eines der Antriebszahnriemen bedeuten in der Regel Stillstand der Anlage und teilweise komplizierte Demontage der Antriebszahnräder, um einen neuen Zahnriemen mit der erforderlichen Riemenspannung aufzulegen.

Lösungen mit Reibrädern, wie sie durch die DE 38 40 256 A1 vorgeschlagen werden, sind für höhere Geschwindigkeiten in der Skidförderung nicht geeignet, sie werden deshalb vorwiegend für Montageplattformen mit wesentlich geringeren Geschwindigkeiten eingesetzt.

Aufgabe der vorliegenden Erfindung ist es, ausgehend von einem gattungsgemäßen Förderer, wie er beispielsweise in der DE 40 07 707 A1 beschrieben ist, ein Antriebssystem für auf ortsfesten Trägerrollen verfahrbare Skids zu schaffen, das zuverlässig und kostengünstig einsetzbar ist, das wartungsfrei ist und das die geforderten höheren Fördergeschwindigkeiten bei geräuscharmen Betrieb ermöglicht.

Zur Lösung der Aufgabe wird erfindungsgemäß vorgeschlagen, dass als Antriebsmittel in jeder Rollenleiste zwischen zwei benachbarten Trägerrollen mindestens ein Reibrad mit parallel zu den Achsen der Trägerrollen ausgerichteter Drehachse integriert ist, deren an die Kufe anlegbare Außenumfangsflächenbereiche die Auflageebene der Kufen auf den Trägerrollen geringfügig überragt. Der bekannte Reibradantrieb mit seitlich an die Transportplattformen anlegbaren Reibrädern wird für die Skidantriebstechnik dadurch nutzbar gemacht, dass die Reibräder nunmehr von unten an der Kufe der Skids anliegen und in der Rollenleisten, die die Trägerrollen des Rollenförderers aufnehmen, integriert sind. Dabei kann gewöhnlich die Teilung der Trägerrollen beibehalten werden, lediglich zwischen zwei Trägerrollen ist in der Rollenleiste ein nach oben offenes Fenster vorgesehen, durch das ein Umfangsbereich des Reibrades hindurchragt, und zwar geringfügig über die durch die Auflagefläche auf den Trägerrollen gebildete Ebene hinaus. Dadurch, dass das Reibrad höher positioniert ist, als die Trägerollen, wird gewährleistet, dass das Reibrad stets an der Unterseite der Kufe anliegt bzw. an diese angedrückt wird. Im elastischen Bereich und aufgrund des hohen Gewichtes der Skids liegen die Kufen dennoch auf den Trägerrollen auf und werden von diesen abgetragen.

Nach einem ausgestalteten Merkmal der Erfindung wird vorgeschlagen, dass die Reibräder beider Rollenleisten sich paarweise gegenüberliegen. Auf diese Weise wird die Antriebskraft, d.h. die Reibkraft der Reibräder symmetrisch auf die Kufen des Skids übertragen, wobei es besonders günstig ist, wenn nach einem anderen Merkmal der Erfindung die beiden sich paarweise gegenüberliegenden Reibräder beider Rollenleisten auf einer gemeinsamen Wellen angeordnet sind. Dadurch wird sichergestellt, dass die Umfangsgeschwindigkeiten beider Reibräder gleich groß sind und eine Schrägstellung des Skids durch einseitig wirkende Kräfte ausgeschlossen wird.

Vorzugsweise sind die sich paarweise gegenüberliegenden Reibräder beider Rollenleisten von einem gemeinsamen Antriebsmotor über ein Winkelgetriebe antreibbar.

Es ist von Vorteil, wenn in jeder Rollenleiste mehrere Reibräder in einem Abstand voneinander angeordnet sind, der kürzer ist als die Länge der Kufen der zu transportierenden Skids. Durch diese Maßnahme wird sichergestellt, dass jedes Skid während des Transportes stets von mindestens einem Reibräderpaar getrieben wird, kurzzeitig sogar von zwei Reibräderpaaren, wenn das Skid beide Reibräderpaare überdeckt.

Es ist weiterhin von Vorteil, wenn jeweils vier der sich paarweise gegenüberliegenden Reibräder zweier Rollenleisten von einem gemeinsamen Antriebsmotor über Kardanwellen und Winkelgetriebe antreibbar sind. Man benötigt bei dieser Lösung für zwei Reibrollenpaare, d.h. für vier Reibräder nur einen einzigen Antriebsmotor, der über die Kardanwellen und die Winkelgetriebe alle Reibräder so synchronisiert, dass sie mit gleichen Umfangsgeschwindigkeiten umlaufen. Das stellt sicher, dass keine seitlichen Kräfte das Skid auf dem Förderer zu verdrehen suchen und vereinfacht gleichzeitig den Antrieb.

Um die Anpresskraft der Reibräder stets zu gewährleisten, wird nach einem weiteren Merkmal der Erfindung vorgeschlagen, die Reibräder unter Federwirkung gegen die Unterseite der Kufen der Skids anzupressen. Dazu kann jedes Reibrad in seiner Lagerung federnd angeordnet sein, es ist aber, wie ein günstiges Merkmal der Erfindung vorschlägt, auch denkbar, das Winkelgetriebe mit der die gegenüberliegenden Reibräder antreibenden Welle auf einer Schwinge anzuordnen, die um eine quer zur Transportrichtung angeordnete horizontale Achse verschwenkbar ist und gegen eine in Anpressrichtung der Reibräder wirkende Federkraft abstützbar ist. Die Feder kann beispielsweise eine Kegeltellerfeder sein, andere Lösungen sind konstruktiv denkbar, wenn nur sichergestellt wird, dass die Federwirkung ausreichend groß, aber nicht größer ist, als das Eigengewicht des über die Reibräder transportierten Skids, weil ansonsten das Skid von den Trägerrollen abgehoben werden würde.

Das erfindungsgemäße Antriebssystem ermöglich das Zusammensetzen der Fließfertigungsstraße aus Rollenfördermodulen, wobei jeder Rollenfördermodul mindestens aus zwei rahmenmäßig quer miteinander verbundenen Rollenleisten, darin integrierten Trägerrollen und Reibräder mit zugehörigen Antrieben und Getrieben besteht.

Die vorgeschlagene Lösung ist vorteilhaft, weil sie ein baukastenartiges Zusammensetzen eines Antriebssystems für Fließfertigungsstraßen ermöglicht, auf denen Skids mit hohen Geschwindigkeiten transportiert werden. Die Anlage ist äußerst geräuscharm und konstruktiv einfach, Wartungsarbeiten entfallen weitgehend, Störungen durch den Ersatz eingebauter Zahnriemen entfallen bei diesem Antriebssystem vollkommen. Der Antrieb selbst ist mit konventionellen Bauteilen leicht zu verwirklichen, so dass ein günstiges Kosten/Nutzungsverhältnis entsteht.

Ein Ausführungsbeispiel der Erfindung ist in der Zeichnung dargestellt und wird nachfolgend beschrieben. Es zeigt:
- Figur 1: eine Seitenansicht und eine Draufsicht auf den Rollenförderer der Erfindung mit zwei Reibrädern,
- Figur 2: eine perspektivische Darstellung des Rollenförderers im Antriebsbereich und
- Figur 3: den Rollenförderer mit vier Reibrollen in Seitenansicht und Draufsicht.

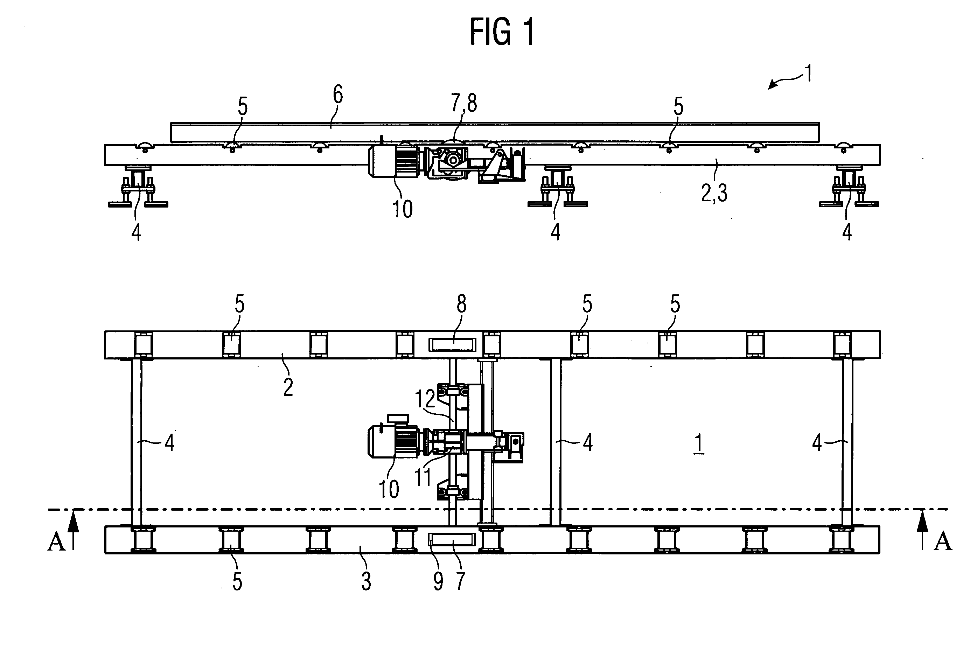

In Figur 1 ist der Rollenförderer insgesamt mit 1 bezeichnet, er besteht aus den beiden Rollenleisten 2 und 3, die über Querträger 4 miteinander verbunden sind. In jeder Rollenleiste ist eine Mehrzahl von gleichmäßig beabstandeten Trägerrollen 5 gelagert, wobei die Trägerrollen 5 der Rollenleiste 3 zusätzlich beidseitig mit Seitenflanschen zur Führung der Kufe eines Skids versehen sind. Eine solche Kufe ist bei 6 in der oberen Seitenansicht des erfindungsgemäßen Förderers dargestellt, sie besteht aus einem langgestreckten Metallprofil. Zwei Kufen 6 gehören jeweils zum Rahmen des Skids und werden auf den Trägerrollen 5 der beiden Rollenleisten 2 und 3 abgetragen.

Wie bei 7 und 8 erkennbar sind unterhalb der Rollenleisten 2 und 3 zwei Reibräder angeordnet, die mit einem Teil ihres Umfangs eine in jeder Rollenleiste 2 und 3 angeordnetes Fenster durchgreifen, so dass der durch dieses Fenster 9 hindurchragende Umfangsbereich jedes Reibrades die Auflageebene der Kufen 6 geringfügig überragt, welche tangential zu den Trägerrollen 5 verläuft.

Die Reibräder 7 und 8 werden beim Fahren eines Skids über die Trägerrollen 5 gegen die Unterseite jeder Kufe 6 gepresst und erzeugen den gewünschten Vortrieb. Zu diesem Zweck werden die Reibräder 7 und 8 durch einen Motor 10 angetrieben, dessen Ausgangswelle mit einem Winkelgetriebe 11 in Verbindung steht, das beidseitig Abgänge für die Welle 12 aufweist, auf der die Reibräder 7, 8 angeordnet sind. Dadurch wird das Drehmoment des Motors 10 in dem Winkelgetriebe 11 verzweigt und die beiden Reibräder 7 und 8 werden mit gleicher Umfangsgeschwindigkeit angetrieben.

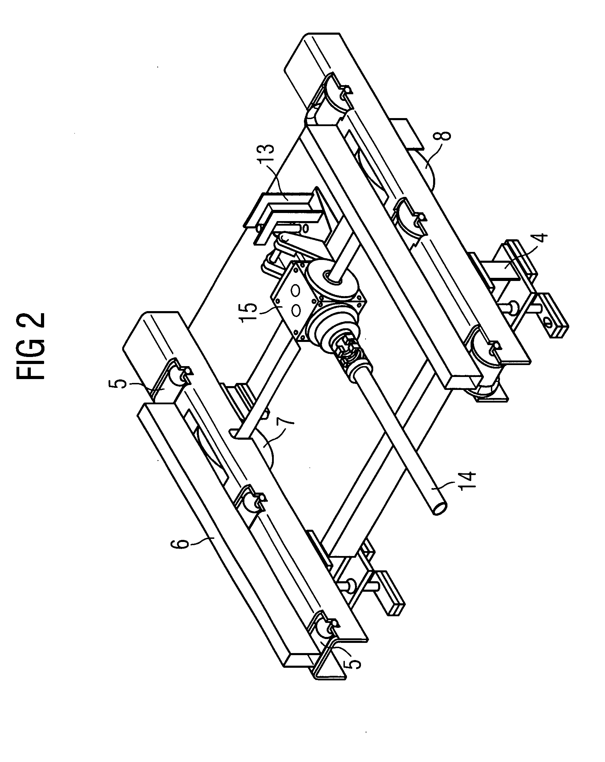

Wie besser in Figur 2 zu erkennen ist, ist das Winkelgetriebe 11 in einer Schwinge 16 gelagert, die bei 13 am Rahmen des Rollenförderers abgestützt ist. Die Schwinge 16 wird von der Kraft einer Feder angehoben, dadurch wird das Winkelgetriebe 11 mit der Welle 12 angehoben und die Reibräder 7 und 8 werden gegen die Unterseiten der Kufen 6 gedrückt. Die Verbindung zwischen dem (hier nicht dargestellten) Antriebsmotor und dem Winkelgetriebe 11 erfolgt über die Kardanwelle 14.

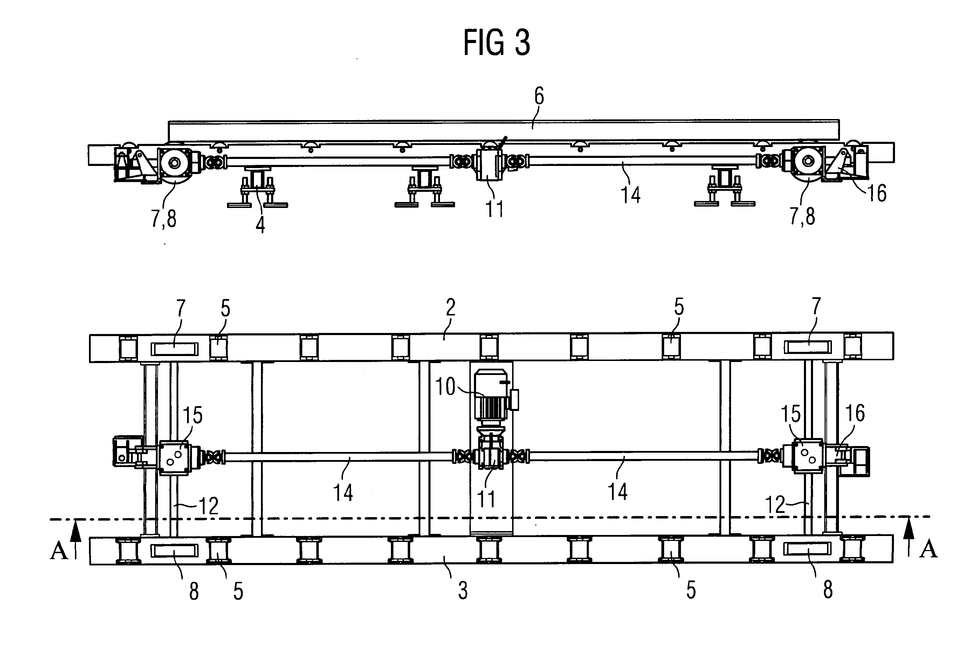

Die Kardanwelle 14 ist in Figur 3 erkennbar, in der eine andere Ausgestaltung der Erfindung dargestellt ist. Im Gegensatz zu der Ausführung nach Figur 1 sind in den Rollenleisten 2 und 3 jeweils zwei Reibräder in einem Abstand angeordnet, der kleiner als die Gesamtlänge der auf den Reibrädern und den Trägerrollen 5 abgetragenen Kufen 6 des Skids ist. Da auch hier die Reibräder sich paarweise gegenüberliegend auf ein und derselben Antriebswelle 12 angeordnet sind, aber für beide Reibrollenpaare 7, 8 nur ein einziger Motor 10 vorgesehen ist, erfolgt die Verbindung zwischen dem Winkelgetriebe 11 des Motors 10 über die Kardanwelle 14 zu weiteren Winkelgetrieben 15 der Wellen 12, die jedem Reibrollenpaar 7, 8 zugeordnet sind. Die Reibrollen 7, 8 sind auch hier über Schwingen 16 gegen die Unterseite der Kufen 6 andrückbar, wobei die Schwinge 16 das Winkelgetriebes 15 trägt und dieses, zusammen mit den Antriebswellen 12 und den Reibrädern 7, 8 durch die Wirkung einer Feder anhebt.

## Patentansprüche

1. Antriebssystem für auf ortsfesten Trägerrollen einer Fließfertigungsstrasse verfahrbare Skids, insbesondere für die Automobilfertigung, bestehend aus mindestens zwei im parallelen Abstand zueinander angeordneten, einen Rollenförderer bildenden Rollenleisten, in denen im Abstand zueinander Trägerrollen um horizontale, quer zur Transportrichtung der Skids ausgerichtete Achsen frei drehbar derartig gelagert sind, dass ein mit seinen Kufen auf den Trägerrollen aufliegendes Skid mittels an den Kufen angreifenden Antriebsmittel fortbewegbar ist,
**dadurch gekennzeichnet, dass** als Antriebsmittel in jeder Rollenleiste (2,3) zwischen zwei benachbarten Trägerrollen (5) mindestens ein Reibrad (7,8) mit parallel zu den Achsen der Trägerrollen (5) ausgerichteter Drehachse integriert ist, dessen an die Kufe (6) anlegbarer Außenumfangsflächenbereich die Auflageebene der Kufen (6) auf den Trägerrollen (5) geringfügig überragt.

2. Antriebssystem nach Anspruch 1,
**dadurch gekennzeichnet, dass** sich die Reibräder (7,8) beider Rollenleisten (2,3) jeweils paarweise gegenüberliegen.

3. Antriebssystem nach Anspruch 1 und 2,
**dadurch gekennzeichnet, dass** die sich paarweise gegenüberliegenden Reibräder (7,8) beider Rollenleisten (2,3) auf einer gemeinsamen Welle (12) angeordnet sind.

4. Antriebssystem nach Anspruch 2 oder 3,
**dadurch gekennzeichnet, dass** die sich paarweise gegenüberliegenden Reibräder (7,8) beider Rollenleisten (2,3) von einem gemeinsamen Antriebsmotor (10) über ein Winkelgetriebe (11) antreibbar sind.

5. Antriebssystem nach einem der Ansprüche 1 bis 4,
**dadurch gekennzeichnet, dass** in jeder Rollenleiste (2,3) mehrere Reibräder (7,8) in einem Abstand voneinander angeordnet sind, der kürzer ist als die Länge der Kufen (6)der zu transportierenden Skids.

6. Antriebssystem nach einem der Ansprüche 1 bis 5,
**dadurch gekennzeichnet, dass** jeweils vier der sich paarweise gegenüberliegenden Reibräder (7 und 8) zweier Rollenleisten (2,3) von einem gemeinsamen Antriebsmotor (10) über Kardanwellen (14) und Winkelgetriebe (11,15) antreibbar sind.

7. Antriebssystem nach einem der Ansprüche 1 bis 6,
**dadurch gekennzeichnet, dass** die Reibräder (7,8) unter Federwirkung gegen die Unterseite der Kufen (6) der Skids anpressbar sind.

8. Antriebssystem nach einem der Ansprüche 1 bis 7,
**dadurch gekennzeichnet, dass** das Winkelgetriebe (11 bzw. 15) mit der die gegenüberliegenden Reibräder (7,8) antreibenden Welle (12) auf einer Schwinge (16) angeordnet sind, die um eine quer zur Transportrichtung angeordnete horizontale Achse verschwenkbar ist und gegen eine in Anpressrichtung der Reibräder (7,8) wirkende Federkraft abstützbar ist.

9. Antriebssystem nach einem dere Ansprüche 1 bis 8,
**dadurch gekennzeichnet, dass** die Fließfertigungsstrasse aus Rollenförderermodulen zusammensetzbar ist, wobei jeder Rollenförderermodul mindestens aus zwei rahmenmäßig (4) quer miteinander verbundenen Rollenleisten (2,3), darin integrierten Trägerrollen (5) und Reibrädern (7,8) sowie zugehörigen Antrieben (10) und Getrieben (11,15) besteht.
